# EUROPEAN PATENT APPLICATION

(11) **EP 4 656 417 A1**
(43) Date of publication of application: **03.12.2025**
(21) Application number: 23918062.3
(22) Date of filing: 24.01.2023
(51) Int. Cl.: B60G 3/20

(54) **REAR SUSPENSION DEVICE**

(71) Applicant: Nissan Motor Co., Ltd., Kanagawa 221-0023 (JP)
(72) Inventor: ABE, Manabu, Atsugi-shi, Kanagawa 243-0123 (JP); MORI, Masatoshi, Atsugi-shi, Kanagawa 243-0123 (JP)
(74) Representative: Global IP Europe Patentanwaltskanzlei
(86) International application number: PCT/JP2023/002019
(87) International publication number: WO 2024/157339

(57) **Abstract**

In a rear suspension device having a four-wheel steering mechanism and linking a wheel (3) and a vehicle body (2) by means of a first upper link (11) and a second upper link (12) and by means of a first lower link (13), a second lower link (14), and a third lower link (15), rigidity of the first upper link (11) is set relatively higher than that of the second upper link (12), the third lower link (15) of the three lower links that is farthest from the first upper link (11) in a plan view of the vehicle is provided with a rear wheel steering actuator (18) of the four-wheel steering mechanism, and the first lower link (13), the second lower link (14), or a knuckle (31) is provided with a shock absorber (16) and a spring (17).

## Description

### [Technical Field]

The present invention relates to a rear suspension device for an automobile.

### [Background Art]

A conventionally known multi-link rear suspension device includes an A-type upper link and three lower links and supports the lower end portion of a spring 14 by a rear-side lower link 7 (Patent Document 1).

### [Prior Art Documents]

### [Patent Documents]

[Patent Document 1] JP4195208B

### [Summary of Invention]

### [Problems to be solved by Invention]

A four-wheel steering (4WS) mechanism is sometimes adopted to improve the vehicle stability and maneuverability. Upon addition of a rear wheel steering actuator of the four-wheel steering mechanism to the rear suspension device of the above conventional technique, if the rear wheel steering actuator is provided on the rear-side lower link supporting the lower end portion of the spring, the spring force of the spring becomes a sliding resistance when the rear wheel steering actuator is operated, so that the rated output of the rear wheel steering actuator needs to be increased. This may result in a problem of the rear wheel steering actuator becoming larger in size.

A problem to be solved by the present invention is to provide a rear suspension device that can suppress an increase in size of a rear wheel steering actuator.

### [Means for solving problems]

The present invention solves the above problem in a rear suspension device having a four-wheel steering mechanism and linking a wheel and a vehicle body by means of two upper links and three lower links, through setting rigidity of one upper link relatively higher than that of another upper link, providing the lower link of the three lower links that is farthest from the one upper link in a plan view of the vehicle with a rear wheel steering actuator of the four-wheel steering mechanism, and providing another lower link or an axle with a shock absorber and a spring.

### [Effect of Invention]

According to the present invention, the rear wheel steering actuator can be provided on the lower link that does not support the shock absorber and the spring, and it is therefore possible to suppress an increase in size of the rear wheel steering actuator.

### [Brief Description of Drawings]

FIG. 1 is a perspective view illustrating a rear suspension device according to one embodiment of the present invention.
FIG. 2 is a plan view of the rear suspension device of FIG. 1 as seen from above the vehicle.
FIG. 3 is a side view of the rear suspension device of FIG. 1 as seen from the side of the vehicle.
FIG. 4 is a rear view of the rear suspension device of FIG. 1 as seen from the rear of the vehicle.
FIG. 5A is a plan view schematically illustrating upper links of the rear suspension device of FIG. 1.
FIG. 5B is a plan view schematically illustrating lower links of the rear suspension device of FIG. 1.
FIG. 5C is a rear view of FIG. 5B.

### [Mode(s) for Carrying out the Invention]

Hereinafter, one or more embodiments of the present invention will be described with reference to the drawings. The rear suspension device according to the present invention is a so-called independent suspension device that can raise and lower the right and left wheels independently, and is also a so-called multi-link suspension device that includes multiple links. The rear suspension device according to the present invention is also a rear suspension device that includes a four-wheel steering mechanism and steers the rear wheels by a small angle in response to the steering operation of the steering wheel. In the following embodiment, the present invention will be described using a rear suspension device suspended between the left rear wheel and the vehicle body as an example, but a rear suspension device suspended between the right rear wheel and the vehicle body can also be configured in the same way.

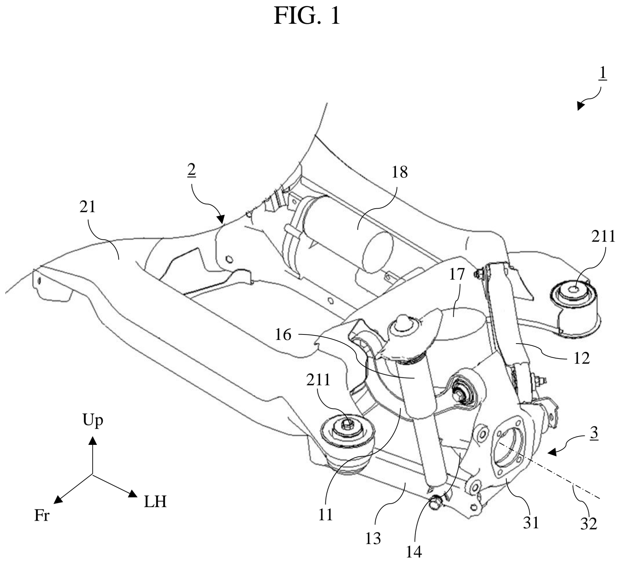

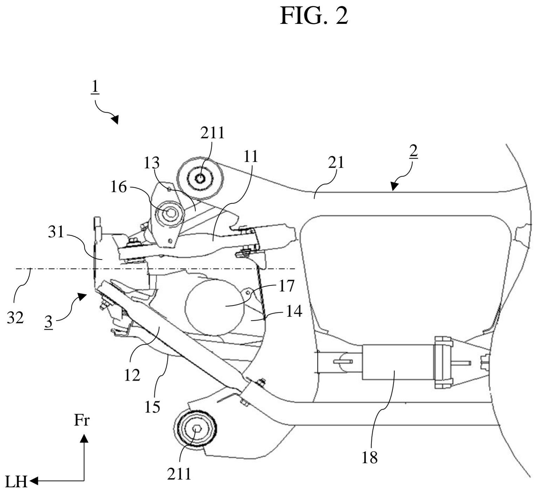

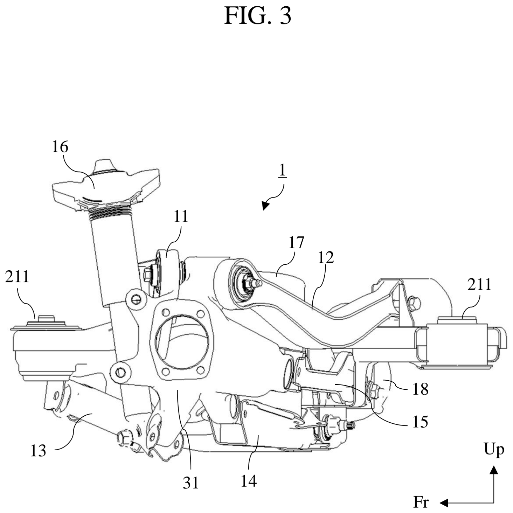

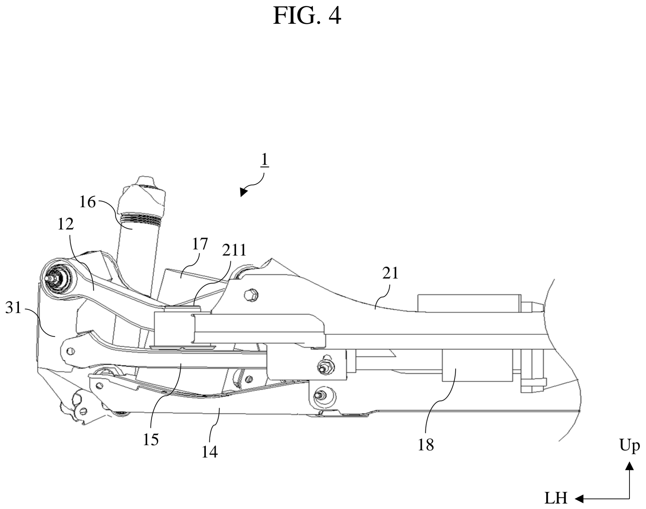

FIG. 1 is a perspective view illustrating a rear suspension device 1 according to one embodiment of the present invention, FIG. 2 is a plan view of the rear suspension device 1 of FIG. 1 as seen from above the vehicle, FIG. 3 is a side view of the rear suspension device 1 of FIG. 1 as seen from the side of the vehicle, and FIG. 4 is a rear view of the rear suspension device 1 of FIG. 1 as seen from the rear of the vehicle. Although the tire and wheel are not illustrated in FIGS. 1 to 4, these tire and wheel are rotatably provided on a knuckle 31, which will be described later, and in the case of a rear-wheel drive vehicle, are connected to a drive shaft (not illustrated, only a wheel axle 32 is illustrated).

The rear suspension device 1 of the present embodiment is suspended between a vehicle body 2 and a wheel 3 and includes two upper links and three lower links as well as a rear wheel steering actuator 18 of the four-wheel steering mechanism. Of the two upper links, the one on the front side of the vehicle is referred to as a first upper link 11, and the one on the rear side of the vehicle is referred to as a second upper link 12. Of the three lower links, the one on the frontmost side in the front-rear direction of the vehicle is referred to as a first lower link 13, the one in the center in the front-rear direction of the vehicle is referred to as a second lower link 14, and the one on the rearmost side in the front-rear direction of the vehicle is referred to as a third lower link 15. In the present embodiment, a rod of the rear wheel steering actuator 18 is connected to one end of the third lower link 15.

Although not particularly limited, these first upper link 11, second upper link 12, first lower link 13, second lower link 14, and third lower link 15 are rigid bodies composed of processed steel plates, cast products, forged products, or the like. Rubber bushings (details not illustrated) are provided at both end portions of the first upper link 11, second upper link 12, first lower link 13, and second lower link 14, one ends of which are swingably attached to brackets provided on the vehicle body 2, and the other ends of which are swingably attached to the knuckle 31 of the wheel 3. Regarding the third lower link 15, one end is connected to the rod of the rear wheel steering actuator 18, and the other end is swingably attached to the knuckle 31 of the wheel 3.

The vehicle body 2 to which one ends of the first upper link 11, second upper link 12, first lower link 13, and second lower link 14 and the rear wheel steering actuator 18 are attached includes rear side members as well as a rear suspension member 21 fixed to the rear floor via rubber bushings 211. In the illustrated embodiment, one ends of the first upper link 11, second upper link 12, first lower link 13, and second lower link 14 are swingably attached to the rear suspension member 21, but some or all of them may be swingably attached to the rear side members, etc.

The rear suspension device 1 of the present embodiment includes, in order from the front side of the vehicle, the first lower link 13, the second lower link 14, and the third lower link 15. Of these, the end portions of the first lower link 13 and second lower link 14 on the wheel 3 side are swingably attached to the lower portion of the knuckle 31 via rubber bushings, and the end portions on the vehicle body 2 side are swingably attached to the lower portion of the rear suspension member 21 via rubber bushings. In contrast, the end portion of the third lower link 15 on the wheel 3 side is swingably attached to the central portion of the knuckle 31 via a rubber bushing as illustrated in FIG. 4, and the end portion on the vehicle body 2 side is connected to the rod of the rear wheel steering actuator 18.

The rear wheel steering actuator 18 of the present embodiment is composed, for example, of a hydraulic cylinder, and the rod moves back and forth by controlling the hydraulic system. As described above, since the rod of the rear wheel steering actuator 18 is connected to the end portion of the third lower link 15 on the vehicle body 2 side and the main body of the rear wheel steering actuator 18 is attached to the vehicle body 2 such as the rear suspension member 21, the rear end portion of the knuckle 31 to which the other end of the third lower link 15 is attached rotates by a predetermined angle as the rear wheel steering actuator 18 is operated. This allows the rear wheels to be steered.

The rear suspension device 1 of the present embodiment further includes a shock absorber 16 and a spring 17. The lower end portion of the shock absorber 16 of the present embodiment is swingably attached to the first lower link 13 as illustrated in FIGS. 1 and 3, and the upper end portion is attached to the vehicle body 2 (not illustrated). The lower end portion of the spring 17 of the present embodiment is attached to the second lower link 14 as illustrated in FIGS. 2 to 4, and the upper end portion is attached to the vehicle body 2 (not illustrated).

The rear suspension device 1 of the present embodiment includes the first upper link 11 and second upper link 12 as I-type upper links. The end portions of the first upper link 11 and second upper link 12 on the wheel 3 side are swingably attached to the upper portion of the knuckle 31 via rubber bushings, and the end portions on the vehicle body 2 side are swingably attached to the lower portion of the rear suspension member 21 via rubber bushings.

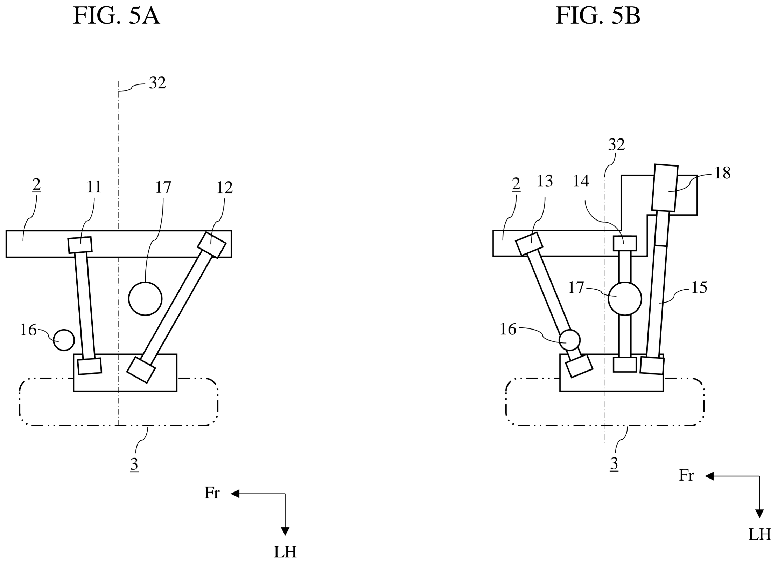

FIG. 5A is a plan view schematically illustrating the first upper link 11 and second upper link 12 of the rear suspension device 1 of the present embodiment, and FIG. 5B is a plan view schematically illustrating the first lower link 13, second lower link 14, third lower link 15, and rear wheel steering actuator 18 of the rear suspension device 1 of the present embodiment. In the rear suspension device 1 of the present embodiment, the hardness of the rubber bushings, for example, is set so that the rigidity of the first upper link 11 and the rigidity of the second upper link 12 are different values. Then, the rigidity of the upper link that is farthest from the third lower link 15 provided with the rear wheel steering actuator 18 in a plan view of the vehicle is set relatively high. In other words, the rear wheel steering actuator 18 of the four-wheel steering mechanism is connected to the lower link of the three lower links that is farthest from the upper link whose rigidity is set relatively high.

For example, in FIGS. 5A and 5B, when the rigidity of the first upper link 11 is set relatively high and the rigidity of the second upper link 12 is set relatively low, the lower link that is farthest from the first upper link 11 in a plan view is the third lower link 15, and the rear wheel steering actuator 18 is therefore provided on this third lower link 15. In contrast, when the rigidity of the first upper link 11 is set relatively low and the rigidity of the second upper link 12 is set relatively high, the lower link that is farthest from the first upper link 11 in a plan view is the first lower link 13, and the rear wheel steering actuator 18 is therefore provided on this first lower link 13.

When the rear wheels are not steered, the rear wheel steering actuator 18 serves as a rigid rod in the toe direction, so by placing the rear wheel steering actuator 18 on the lower link (the third lower link 15 in this example) that is farthest from the upper link (the first upper link 11 in this example) that has the relatively higher rigidity of the two upper links, the distance in the front-rear direction between the support points with high rigidity among the support points that support the force in the toe direction is maximized. This improves the toe rigidity when the rear wheels are not steered, and improves the straight-line traveling performance of the vehicle.

In addition, when the rear wheels are steered by the rear wheel steering actuator 18, the principle of leverage acts to generate a large moment, thus eliminating the need for the rear wheel steering actuator 18 to generate a large force and allowing for a smaller size. Furthermore, there is no need to support the shock absorber 16 or spring 17 on the third lower link 15 provided with the rear wheel steering actuator 18, and there is therefore no need to increase the rated output of the rear wheel steering actuator 18.

The hardness of the rubber bushings is set so that the rigidity of one upper link is higher or lower than the rigidity of the other upper link. Increasing the hardness of the rubber bushings increases the rigidity of the rubber bushings, making it possible to increase the rigidity of the upper links. Conversely, decreasing the hardness of the rubber bushings decreases the rigidity of the rubber bushings, making it possible to decrease the rigidity of the upper links. The means for making the rigidity of one upper link different from the rigidity of the other upper link is not limited to setting the rigidity of the rubber bushings, and the rigidity of an upper link main body may be made different by changing the shape or material of the upper links, etc. The rigidity of an upper link refers to the degree of resistance to deformation in response to the force input to the upper link, and when the deformation in response to the input is small, the rigidity is said to be high, while when the deformation is large, the rigidity is said to be low.

In the rear suspension device 1 of the present embodiment, there is no particular limitation as to which of the first upper link **11** and the second upper link 12 is set to have a relatively higher rigidity, and any of the two may be set to have a relatively higher rigidity. For example, in the rear suspension device 1 of the present embodiment, when the rigidity of the first upper link 11 and the rigidity of the second upper link 12 are made different, as illustrated in the plan view of FIG. 5A, the rigidity of the first upper link 11 located on the front side in the front-rear direction of the vehicle is set to be higher than the rigidity of the second upper link 12 located on the rear side in the front-rear direction of the vehicle.

The imaginary kingpin axis is inclined toward the first upper link 11, which has a higher rigidity among the two upper links, and the imaginary kingpin axis is therefore inclined forward. This can sufficiently ensure the distance between the ground contact position directly below the center of the tire and the intersection point of the imaginary kingpin axis with the ground, that is, the caster trail, and the point at which lateral force is generated in the tire is shifted backward, reducing the offset between the point at which lateral force is generated in the tire and the imaginary kingpin axis. Thus, the required thrust force of the rear wheel steering actuator 18 can be reduced, and an increase in size can be further suppressed. Note that the intersection point between the imaginary kingpin axis and the ground is located behind the rotation axis.

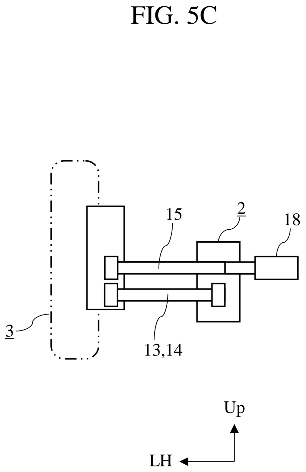

In addition, in the rear suspension device 1 of the present embodiment, as illustrated in FIG. 5C, the attachment position of the third lower link 15 provided with the rear wheel steering actuator 18 is set to a position higher than the attachment positions of the other two first lower link 13 and second lower link 14 in a vehicle side view (or vehicle front view or vehicle rear view). FIG. 5C is a rear view of FIG. 5B, and is a schematic diagram for easily understanding the relationship between the attachment positions in the height direction of the first lower link 13, second lower link 14, and third lower link 15. By locating the third lower link 15, which is provided with the rear wheel steering actuator 18, at a higher position than the other two lower links, the first lower link 13 and the second lower link 14, the distance to the center of the wheel is increased. This increases the moment during steering, and the size of the rear wheel steering actuator 18 can be further suppressed.

In general, the center of rotation of the rear suspension device 1 is set in front of the wheel 3 to suppress changes in the posture during braking. When the rear suspension device 1 of the present embodiment strokes in the contracting direction, the axle rotates counterclockwise when viewed from the left side of the vehicle side view, so the stroke amount of the second lower link 14 is larger than the stroke amount of the first lower link 13. Accordingly, if the shock absorber 16 is provided on the second lower link 14, the required stroke amount becomes longer, and the overall length of the shock absorber 16 needs to be increased, which results in a problem in that the attachment position of the upper end portion of the shock absorber 16 becomes higher, narrowing the luggage compartment of the cabin.

Fortunately, however, in the rear suspension device 1 of the present embodiment, as illustrated in the plan view of FIG. 5B, the first lower link 13 of the three lower links that is at the frontmost position in the front-rear direction of the vehicle is provided with the shock absorber 16, the second lower link 14 of the three lower links that is at the central position in the front-rear direction of the vehicle is provided with the spring 17, and the third lower link 15 of the three lower links that is at the rearmost position in the front-rear direction of the vehicle is provided with the rear wheel steering actuator 18. Accordingly, the stroke of the shock absorber 16 relative to the stroke of the wheel 3 can be reduced. As a result, the height of the upper end portion of the shock absorber 16 can be set low, and the volume of the luggage compartment behind the cabin can be increased for application to a station wagon or the like.

Note that, instead of providing the shock absorber 16 on the first lower link 13 of the three lower links that is at the frontmost position in the front-rear direction of the vehicle, the lower end portion of the shock absorber 16 may be swingably attached to an axle such as the knuckle 31 via a rubber bushing. By providing the lower end portion of the shock absorber 16 on the axle, the components of the rear suspension device 1 can be shared even if the vehicle types are different, such as a sedan and a station wagon.

### [Description of Reference Numerals]

- 1: Rear suspension device
11 First upper link
12 Second upper link
13 First lower link
14 Second lower link
15 Third lower link
16 Shock absorber
17 Spring
18 Rear wheel steering actuator
- 2: Vehicle body
21 Rear suspension member
- 3: Wheel
31 Knuckle
32 Wheel axle

## Claims

1. A rear suspension device having a four-wheel steering mechanism and linking a wheel and a vehicle body by means of two upper links and three lower links, wherein
rigidity of one upper link is set relatively higher than that of another upper link,
the lower link of the three lower links that is farthest from the one upper link in a plan view of the vehicle is provided with a rear wheel steering actuator of the four-wheel steering mechanism, and
another lower link or an axle is provided with a shock absorber and a spring.

2. The rear suspension device according to claim 1, wherein the one upper link is provided on a front side of the other upper link in a front-rear direction of the vehicle.

3. The rear suspension device according to claim 1 or 2, wherein the lower link provided with the rear wheel steering actuator is provided at a higher position than the other two lower links in a side view of the vehicle.

4. The rear suspension device according to any one of claims 1 to 3, wherein
the lower link of the three lower links that is at a frontmost position in a front-rear direction of the vehicle is provided with the shock absorber,
the lower link of the three lower links that is at a central position in the front-rear direction of the vehicle is provided with the spring, and
the lower link of the three lower links that is at a rearmost position in the front-rear direction of the vehicle is provided with the rear wheel steering actuator.

5. The rear suspension device according to any one of claims 1 to 3, wherein
the axle is provided with the shock absorber,
the lower link of the three lower links that is at a central position in a front-rear direction of the vehicle is provided with the spring, and
the lower link of the three lower links that is at a rearmost position in the front-rear direction of the vehicle is provided with the rear wheel steering actuator.

6. The rear suspension device according to any one of claims 1 to 5, wherein the rigidity of each upper link is set by means of rigidity of a rubber bushing provided at an end portion of the upper link.
